Europäisches Patentamt

European Patent Office

Office européen des brevets

(11) Publication number: **0 451 413 A2**

## (12) EUROPEAN PATENT APPLICATION

(21) Application number: **90313740.4**

(22) Date of filing: **17.12.90**

(51) Int. Cl.5: **G03B 9/00**

(30) Priority: **11.04.90 US 508057**
**19.10.90 US 600520**

(43) Date of publication of application:
**16.10.91 Bulletin 91/42**

(84) Designated Contracting States:
**AT BE CH DE DK ES FR GB GR IT LI LU NL SE**

(71) Applicant: **Jones, Aaron**
**3 Vaquero Road**
**Santa Fe, New Mexico 87505(US)**

(72) Inventor: **Jones, Aaron**
**3 Vaquero Road**
**Santa Fe, New Mexico 87505(US)**

(74) Representative: **Thomson, Paul Anthony**
**Potts, Kerr & Co. 15, Hamilton Square**
**Birkenhead Merseyside L41 6BR(GB)**

(54) **Photographic exposure control apparatus and method.**

(57) A photographic exposure control apparatus (10) includes a directable light source (14), and an auxiliary shutter (12) which is located between a camera lens (40) and a subject (50). The auxiliary shutter (12) includes a housing structure (16) which has a window (30) therein. The window is selectively opened and closed by a blade (32) which is movably mounted on the housing structure, which is motor (34) driven, and which allows the housing structure to block entry of light into a camera lens (40) when the window (30) is closed, and to allow light into the lens when the window is open. A filter (243) is carried in a holder (242) which is mounted on the housing structure (16) and is selectively, remotely insertable between the lens and a subject.

The method of the invention includes the steps of positioning a subject (50) and a film-containing camera (38) so that the subject is in the view of the camera, under-exposing an image of the subject on the film, directing an emitted light beam at the subject, opening the auxiliary shutter (12) for a predetermined time interval with the emitted light beam directed at a particular portion of the subject, and closing the auxiliary shutter at the end of a predetermined time interval. A filter (243) may be selectively, remotely inserted between the camera lens (40) and the subject (50).

## Background of the Invention

The invention relates to photographic equipment, and specifically to an exposure control apparatus and method which facilitates selective exposure of a portion of photographic film from a highlighted portion of a subject being photographed.

A photographic image may be enhanced with the application of carefully controlled light to specific portions or parts of the subject being photographed. Known techniques for accomplishing such selective lighting include multiple flash exposures directed at a specific part of the subject while the camera shutter remains open, using a flashlight type device to direct light over specific parts of the subject with the camera lens open, or using a fiber-optic cable to direct light to the subject, again, with the camera lens held open. In the preceding techniques, the light source is turned on and off as required to control light directed towards to subject.

Another technique is to open the camera shutter, block any light from entering the camera lens with a dark obstruction and periodically removing the obstruction while the light is moved over specific areas of the subject.

One skilled in the art can readily perceive that continuous switching on and off of a light source or blocking the camera lens with a hand-held opaque object requires a great deal of coordination and does not lend itself to readily repeatable results.

In some situations, it is desirable to provide a soft-focus filter between the camera lens and a subject. The easiest way to accomplish this is to place a filter on the threaded receiver of a camera lens. Placing and removing a filter from an open camera lens may be successfully done once or twice during a shoot, however, repeated contact with the camera lens is likely to slightly move the camera and blur the photograph.

An object of the invention is to provide an apparatus and method for selectively exposing portions of a light-sensitive film with light reflected from a subject being photographed, and to be able to do so with predictable repeatability.

Another object of the invention is to provide an apparatus which will facilitate the aforementioned object, and which includes an auxiliary shutter which is remotely operable by the photographer who is directing light to a specific part of the subject.

Yet another object of the invention is to provide an apparatus which will facilitate the aforementioned objects, and which includes a mechanism for inserting and removing a filter between the camera lens and the subject.

A further object of the invention is to provide an apparatus which will not affect camera stability during extended, repeat exposures.

Yet another object of the invention is to provide a directable light source which may be easily manipulated by the photographer.

Still another object of the invention is to provide a connection between the direct light source and the auxiliary shutter of the invention which allows selective, remote operation of the auxiliary shutter.

Another object of the invention is to provide an auxiliary shutter with an integral timing mechanism which provides an indication of elapsed time of an exposure.

## Summary of the Invention

The photographic exposure control apparatus of the invention includes a directable light source, and an auxiliary shutter which is located between the camera lens and the subject. The auxiliary shutter includes a housing structure which has a window therein. The window is selectively opened and closed by a blade which is movably mounted on the housing structure, which is motor driven, and which allows the housing structure to block entry of light into a camera lens when the window is closed, and to allow light into the lens when the window is open. One form of the invention includes a filter holder which is attached to the housing and allows selective, remote insertion and removal of a filter.

The method of the invention includes the steps of positioning a subject and a film-containing camera so that the subject is in the view of the camera, under-exposing an image of the subject on the film, positioning an auxiliary shutter between the subject and the camera, with the auxiliary shutter in a closed condition, darkening the environment containing the subject and the camera, providing an emitted light beam which may be directed towards the subject using a light source and a fiber-optic cable which has an auxiliary shutter control button located thereon, directing the emitted light beam at the subject, opening the auxiliary shutter for a predetermined time interval with the emitted light beam directed at a particular portion of the subject, and closing the auxiliary shutter with the auxiliary-shutter control button at the end of a predetermined time interval. Additionally, the filter may be selectively positioned and removed.

These and other objects and advantages of the invention will become more fully apparent as the description which follows is read in conjunction with the drawings.

## Brief Description of the Drawings

Fig. 1 is a somewhat schematic representation of the apparatus of the invention.

Fig. 2 is a side elevation of portions of the apparatus arranged for a photographic session.

Fig. 3 is a schematic diagram of the electrical circuit of the invention.

Fig. 4 is a greatly enlarged side elevation of a fiber-optic directing wand of the invention.

Fig. 5 is an alternate embodiment of an auxiliary shutter of the invention.

Fig. 6 is a front elevation of a third embodiment of the auxiliary shutter constructed according to the invention, with portions broken away to show detail.

Fig. 7 is a side elevation of the auxiliary shutter of the invention, taken generally along the line 7-7 of Fig. 6.

Fig. 8 is a side elevation of the auxiliary shutter of the invention of Fig. 6 arranged for a photographic session.

Fig. 9 is a greatly enlarged side elevation of a fiber-optic directing wand of the invention of Fig. 6.

Fig. 10 is a schematic diagram of the electrical circuit of the invention of Fig. 6.

Detailed Description of the Preferred Embodiments

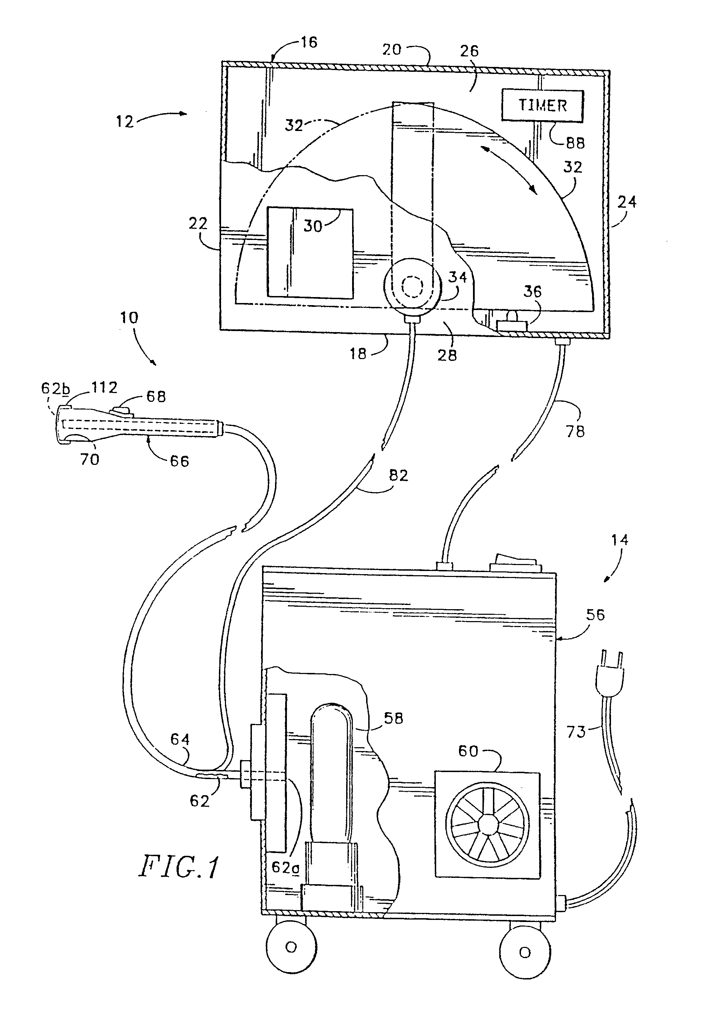

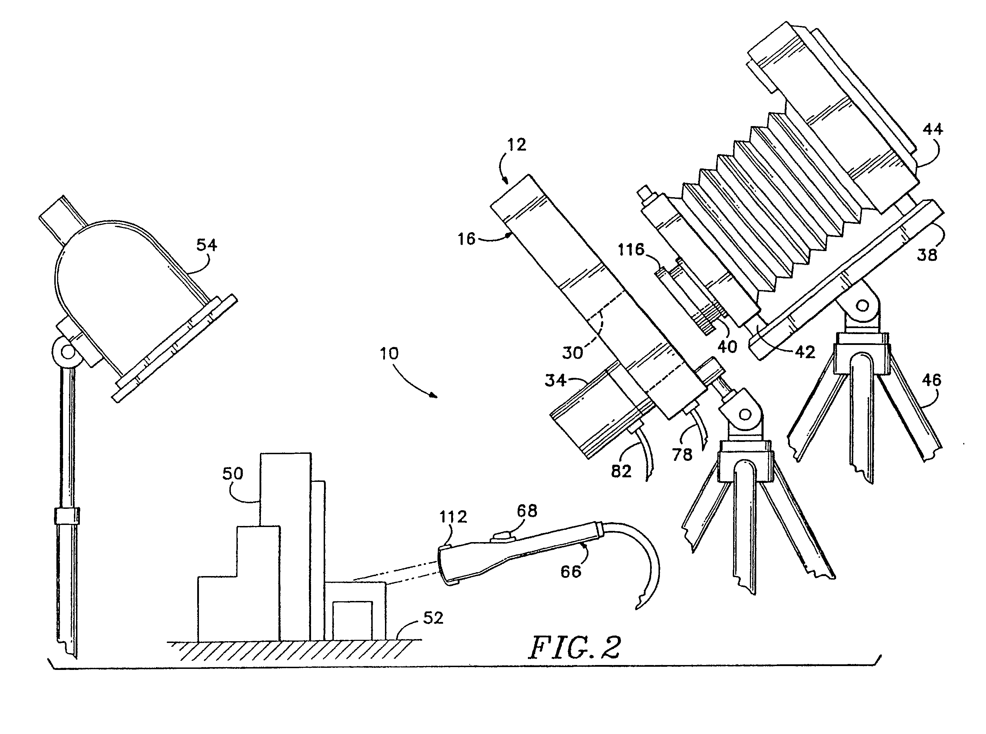

Referring now to the drawings, and initially to Figs. 1 and 2, the photographic exposure control apparatus of the invention is shown generally at 10. Apparatus 10 includes an auxiliary shutter, or auxiliary shutter means, shown generally at 12, and a directable light source, or directable light source means, shown generally at 14. Apparatus 10 is generally intended for use in a photo studio where lighting conditions may be closely controlled.

Auxiliary shutter 12 includes a housing structure 16, which is generally rectangular in the preferred embodiment. Housing structure 16 includes a bottom side 18, a top side 20, and spaced part ends 22, 24. An upper surface 26 is spaced from a lower surface 28 by the width, or height, of the sides of the housing structure.

A window 30 is formed between the upper and lower surface of housing structure 16, and in the preferred embodiment, is rectangular in shape, with each side thereof having a dimension of approximately 5 inches (12.7 cm). Window 30 is opened and closed by the shifting of a blade, or blade means 32, which, in this embodiment of the invention, is rotatably, shiftably mounted within housing structure 16, within the confines of the sides and upper and lower surfaces. In this embodiment of the apparatus, blade 32 takes the form of a single leaf, which has a quarter-circle configuration and which is moved by a rotary solenoid, or motor, 34. Motor 34 is secured to housing structure 16 and is operable to shift blade 32 between a withdrawn condition, as depicted in solid lines in Fig. 1, and an extended position, as shown by the dashed lines in Fig. 1. A first switch 36 is provided in housing structure 16 and is closed when blade 32 reaches its fully withdrawn position. The operation of the mechanism activated by switch 36 will be described later herein.

As depicted in Fig. 2, axillary shutter 12 is used in conjunction with a camera 38, having a lens 40, a shutter release 42 and a film holder 44 containing light-sensitive, photographic film therein. Camera 38 is mounted on a camera stand 46 to hold the camera in a fixed position during the shoot.

Auxiliary shutter 12 is carried on a separate stand 48 with window 30 aligned, and in close proximity to lens 40, to enable the image of a subject 50 to pass through window 30 in an unobstructed manner. Subject 50 is placed on a stand 52 and may be illuminated by one or more flood or strobe lights, such as light 54, to provide proper subject/camera alignment, focussing and perspective. Only one such light is depicted in Fig. 2 to simplify the drawing.

Referring back to Fig. 1, directable light source 14 includes a light-tight enclosure 56 which contains a light source 58. In the preferred embodiment, light source 58 is a projection bulb of a tungsten or daylight color balance, depending on the type of film used or effect desired. Other types of light sources may be provided to achieve different effects. As may be expected, light source 58 generates heat as well as light, and for this reason, a fan 60 is provided in enclosure 56 to provide cooling air over light source 58. Enclosure 56 is provided with suitable baffles to allow the intake and exhaust of air from the interior thereof without allowing any light to be emitted from the enclosure. Enclosure 56 is mounted on casters or rollers to provide free rolling movement of the enclosure about the studio.

An elongate, fiber-optic cable 62 is connected to enclosure 56, with one end 62a thereof being located proximal to light source 58, thereby picking up light from light source 58 and conducting it along the length of the cable to the other end 62b thereof where the light is emitted. In the preferred embodiment, fiber-optic cable 62 is a 3/8 inch diameter optical glass fiber. Other fiber-optics may be used, such as acrylics, and the diameter may be changed according to the desires and needs of a particular situation. Cable 62 is wrapped with an opaque shield 64 to prevent light from escaping through the sides of the cable, and to protect the outer surface of the cable during use. Cable 62 may be used to pull enclosure 56 about the studio.

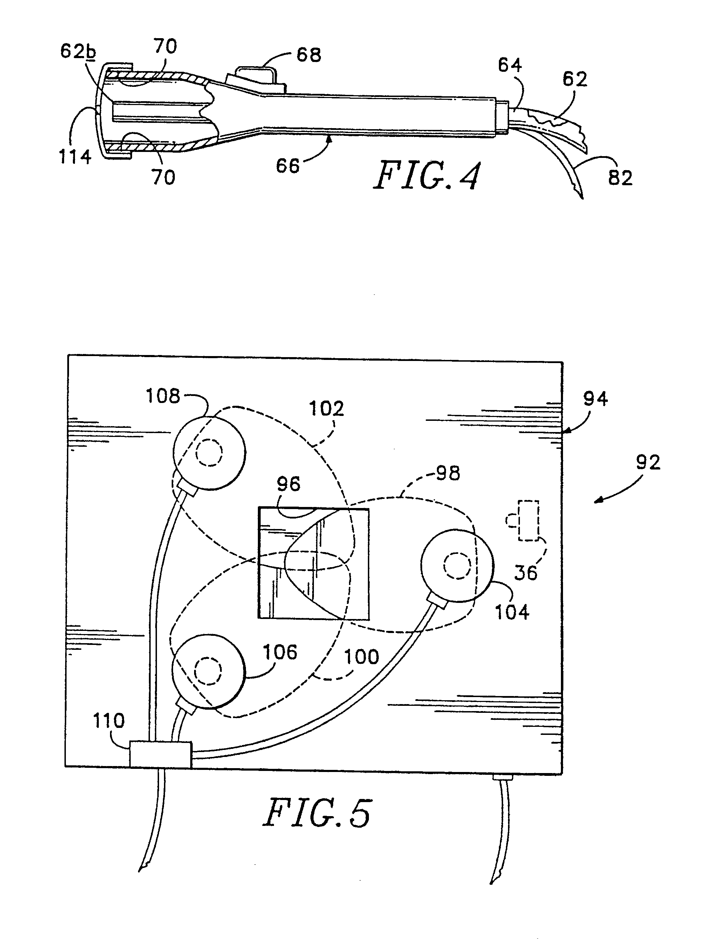

Turning momentarily to Fig. 4 a first embodiment of a cable-directing wand 66 is depicted having cable 62 extending therethrough. Wand 66 provides a grip at the other end of cable 62 and provides a fixation device for other components of the apparatus. A blade activation switch 68 is carried on wand 66, as is what is referred to herein as attachment means 70, which will be described in more detail later herein.

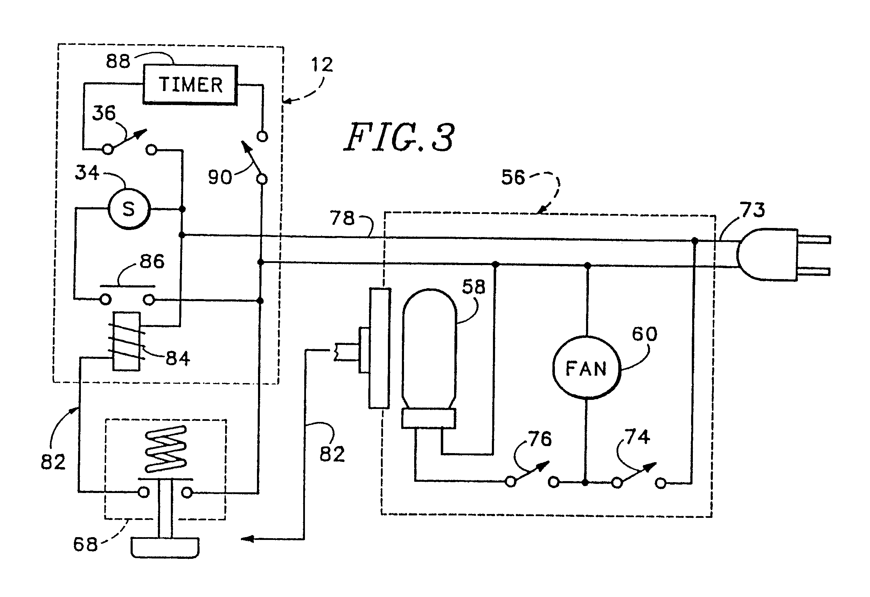

Turning now to Fig. 3, an electrical control circuit of the apparatus is depicted generally at 72. Circuit 72 includes a conventional power supply cord and plug 73 which is connected to light-tight enclosure 56. As previously noted, light-tight enclosure 56 includes a light source 58 and a fan 60. A fan switch 74 is operable to turn fan 60 on and a light switch 76 is operable to turn light source 58 on. The circuit is arranged such that light source 58 cannot be turned on unless fan 60 is running. This allows light source 58 to be turned off while fan 60 remains running at the end of a session to cool enclosure 56. Alternately, a heat sensor switch may be used to control fan 60. A cable 78 extends from light-tight enclosure 56 to auxiliary shutter 12. Alternately, of course, auxiliary shutter 12 may have a separate power cord and plug and be completely independent of light-tight enclosure 56.

Auxiliary shutter 12, as previously noted, contains rotary solenoid 34, which is attached to blade 32 and which is connected to power cord 78. A connection circuit 80 is located between blade activation switch 68 and solenoid 34 and includes a cable 82 which extends between auxiliary shutter 12, along fiber-optic cable 62, secured to the outside of sheath 64, and which terminates at blade activation switch 68. In the preferred embodiment, a relay 84 is located in auxiliary shutter 12 and closes a relay switch 86, which activates rotary solenoid 34. In the preferred embodiment, blade activation switch 68 and relay 84 are constructed and arranged to alternately activate and deactivate solenoid 34 in a toggle-like manner, thereby alternately opening and closing window 30 with blade 32. This feature is accomplished by using a latching mechanism on blade activation switch 68 which, when the switch is initially pressed, forms a connection, closing relay switch 86, which will remain closed until activation switch is pressed again, thereby unlatching its mechanism and releasing relay 84 and relay switch 86. Blade activation switch 68, motor 34 and connection circuit 80, including relay 84 and relay switch 86, comprise what is referred to herein as blade activation means or activation mechanism. As shown in another embodiment of the invention, the components in the auxiliary shutter may be operated with low voltage DC if desired.

A timer, or timing means, 88 is provided, and includes a mechanism to provide an indication of elapsed exposure time when blade 32 is in its fully withdrawn position, which results in the closure of switch 36. Timer 88 is constructed, in the preferred embodiment, to provide a timing increment of one-second and includes a sound generator for emitting a first distinctive audible sound, such as a beep at the end of each one-second increment. Such combined timers/sound generators are believed to be well known to those skilled in the art. For reason which become apparent later herein, it is important that the photographer know how long window 30 is open for any given exposure. A second switch 90 is provided to deactivate timer 88.

Referring now to Fig. 5, an alternate form of the auxiliary shutter is depicted generally at 92. Housing structure 94 is constructed similarly to housing structure 16 and includes a window 96. Blade means in this embodiment includes three leaves 98, 100 and 102. The leaves may be operated with a gear arrangement by a single motor, or, as depicted, may be individually activated by rotary solenoids 104, 106 and 108, all of which are simultaneously activated by a relay and switch 110.

Operation of apparatus 10, incorporating either auxiliary shutter 12 or auxiliary shutter 92 enables a photographer to direct emitted light from end 62b of fiber-optic cable 62 to a desired location on subject 50. With the apparatus and method of the invention, photographs may be created which have a strong resemblance to art work done by an artist using an airbrush in that particular surfaces, curves, angles, etc., may be accentuated or highlighted. This technique is similar to what is referred to as "dodging" during the darkroom processing of a print, in that light is directed to a specific area of what will be the final image to accentuate highlights which would not otherwise be emphasized.

One way to describe the method of the invention is that it is painting with light, much as an artist paints with a brush. To this end, attachment means 70 are provided on wand 66 and allow for the attachment of light-modifying implements, such as that depicted at 112 in Fig. 4. The particular implement depicted includes a very fine slot 114 formed in what is an otherwise opaque substance forming implement 112, which allows a very narrow beam of light to be directed towards the subject. Other implements may be provided which have various geometric shapes formed therein, or which provide a diffusing or translucent cover over the emitting end of wand 66, which are particularly useful when directing the emitted light towards chromed or other highly reflective surfaces. Additionally, wand 66 may be fitted with implements which will polarize or color the emitted light, or, if the emitted light is too intense, provide a neutral density filtering function to the light emitted from wand 66. A filter 116 may be placed over camera lens 40 to provide a desired photographic effect.

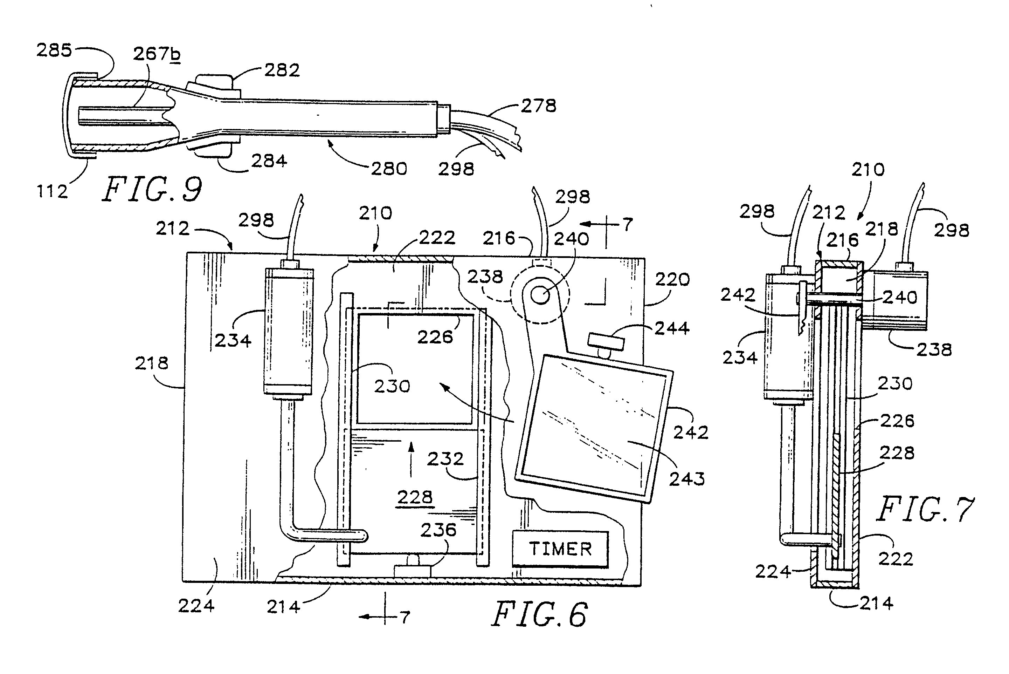

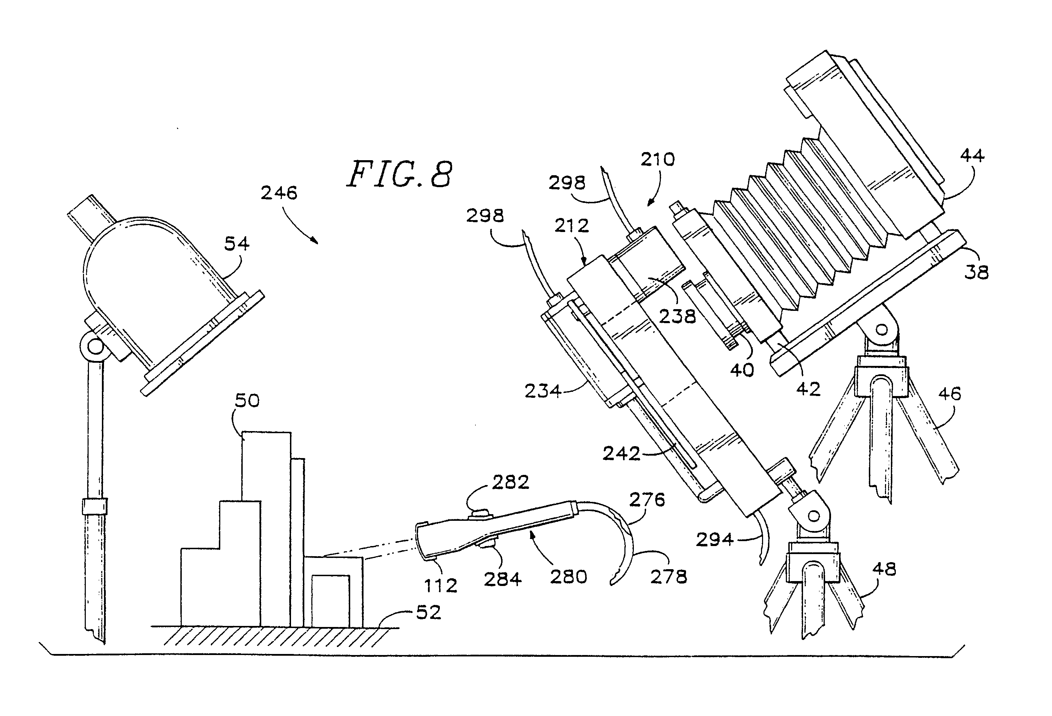

Referring now to Figs. 6 and 7, a third embodiment of the auxiliary shutter exposure control apparatus of the invention is shown generally at 210. Auxiliary shutter 210 includes a housing structure 212, which is generally rectangular. Housing structure 212 is constructed similarly to housing structure 12, and includes a bottom side 214, a top side 216, and spaced part ends 218, 220. An upper surface 222 is spaced from a lower surface 224 by the width, or height of the sides of the housing structure.

A window 226 is formed between the upper and lower surfaces of housing structure 212, and in the preferred embodiment, is rectangular in shape, with each side thereof having a dimension of approximately 5 inches (12.7 cm). Window 226 is opened and closed by the shifting of a blade, or blade means 228, which, in this embodiment, is shiftably mounted within housing structure 212, within the confines of the sides and upper and lower surfaces and slides in rails 230, 232, which are secured to the inside of lower surface 224. In this embodiment of the apparatus, blade 228 takes the form of a single leaf, which has a rectangular configuration and which is moved by a linear solenoid, or motor, 234. Motor 234 is secured to housing structure 212 and is operable to shift blade 228 between a withdrawn condition, as depicted in solid lines in Fig. 6, and an extended position, as shown by the phantom lines in Fig. 6. A first switch 236 is provided in housing structure 212 and is closed when blade 228 reaches its fully withdrawn position, thereby activating the timing mechanism for this embodiment of the invention. Alternately, a multiple blade shutter mechanism, such as depicted in Fig. 5 may be used in place of blade 228.

A rotary solenoid 238 is attached to upper surface 222 and has a shaft 240 extending therefrom through housing 212. A filter holder 242 is attached to the free end of shaft 240 and is shiftable between a withdrawn position, shown in Fig. 6, and an extended position wherein the filter holder shifts to surround window 226. A photographic filter 243, of the same optical characteristics as those generally attached to a camera lens, is carried in holder 242.

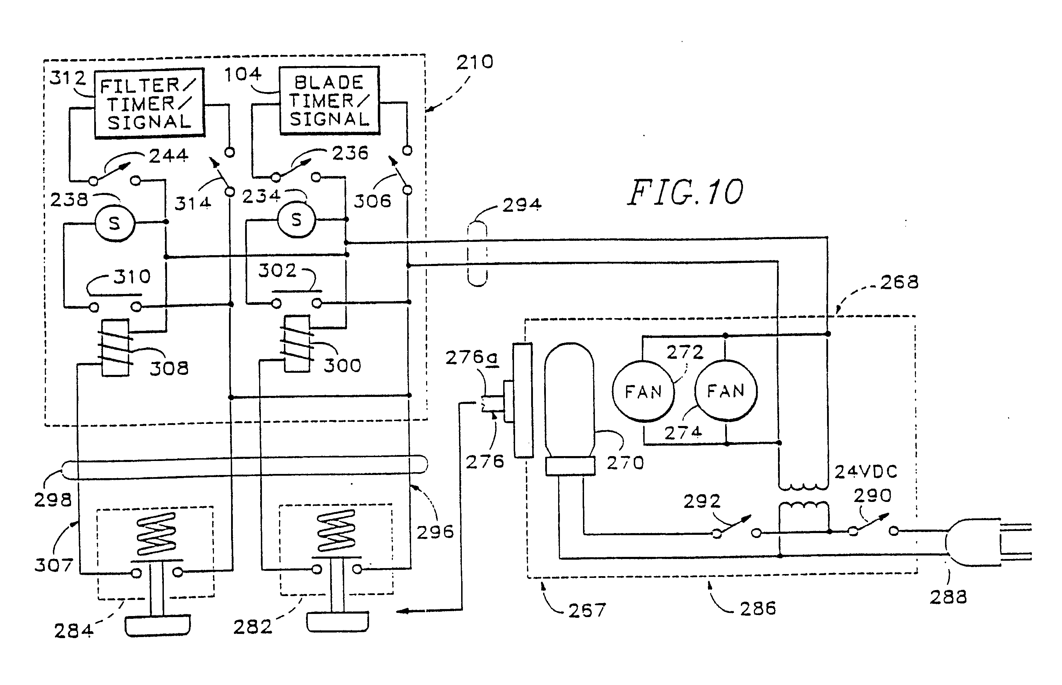

Referring now to Figs. 8, 9 and 10, a complete photographic exposure control apparatus is shown generally at 246. Apparatus 246 includes auxiliary shutter 210, and a directable light source, or directable light source means, shown generally at 268 (Fig. 10). As depicted in Fig. 8, axillary shutter 210 is used in conjunction with camera 38. Auxiliary shutter 210 is carried on a stand 48 with window 226 aligned, and close to lens 40, to enable the image of a subject 50 to pass through window 226 in an unobstructed manner.

Referring specifically now to Fig. 10, a directable light source 267, similar to directable light source 14, includes a light-tight enclosure, schematically represented by box 268, which contains a light source 270, and fans 272, 274. An elongate, fiber-optic cable 276 is connected to enclosure 268, with one end 276a thereof being located proximal to light source 270, thereby picking up light from light source 270 and conducting it along the length of the cable to the other end 276b thereof, in wand 280, where the light is emitted. Like cable 82, cable 276 is wrapped with an opaque shield 278 to prevent light from escaping through the sides of the cable, and to protect the outer surface of the cable during use. Cable 276 may be used to pull enclosure 268 about the studio.

A cable-directing wand 280 is depicted having cable 276 extending therethrough. Wand 280 provides a grip at the other end of cable 276 and provides a fixation device for other components of the apparatus. A blade activation switch 282 and a filter activation switch 284 are carried on wand 280, as is attachment means 285.

Turning now to Fig. 10, an electrical control circuit of the apparatus is depicted generally at 286. Circuit 286 includes a conventional power supply cord and plug 288 which is connected to light-tight enclosure 268. As previously noted, light-tight enclosure 268 includes a light source 270 and fans 272, 274. A fan switch 290 is operable to turn fans 272, 274 on and a light switch 292 is operable to turn light source 270 on. A cable 294 extends from light-tight enclosure 268 to auxiliary shutter 210. The components in this embodiment of the auxiliary shutter may be operated with 24V DC.

Auxiliary shutter 210, as previously noted, contains linear solenoid 234, which is attached to blade 228 and which is connected to cable 294, which is a power supply cable extending between enclosure 268 and auxiliary shutter 210. A connection circuit 296 is located between blade activation switch 282 and solenoid 234 and includes a cable 298, one portion of which extends between auxiliary shutter 210, along fiber-optic cable 276, secured to the outside of sheath 278, and which terminates at blade activation switch 282. In the preferred embodiment, a relay 300 is located in auxiliary shutter 210 and closes a relay switch 302, which activates linear solenoid 234.

Blade activation switch 282 and relay 300 are constructed and arranged to alternately activate and deactivate solenoid 234 in a toggle-like manner, like switch 68 and relay 84 (Fig. 3), thereby alternately opening and closing window 226 with blade 228. Blade activation switch 282, motor 234 and connection circuit 296, including relay 300 and relay switch 302, comprise what is referred to herein as blade activation means or activation mechanism.

A blade timer, or blade timing means, 304 is provided, and includes a mechanism to provide an indication of elapsed exposure time, such as an integrally formed first sound generator which produces a first distinctive sound, when blade 228 is in its fully withdrawn position, which results in the closure of switch 236. Switch 306 is operable to deactivate the blade timer and sound generator if desired.

Filter holder 242 is connected to circuit 286 and is activated by filter activation switch 284, which is connected through cable 298 to auxiliary shutter 210. A connection circuit 307 for filter holder 242 includes a relay 308, and relay switch 310. When switch 310 is closed, rotary solenoid 238 shifts filter holder 242 over window 226. A second switch 244 closes when filter holder 242 shifts to its extended position over window 226, thereby activating a timer, or filter timing means, which includes a filter signal generator, which emits a second distinctive audible sound, including a steady or pulsed tone, which is different than that generated by blade timer 314. A filter signal deactivation switch 314 is provided to eliminate the tone if desired. As previously noted, filter activation switch 284 is of the momentary contact type and must be held in its closed position in order to maintain filter 243 over window 226. Once filter activation switch 284 is released, filter holder 242 shifts to its withdrawn position, thereby opening second switch 244 and terminating the tone from filter signal generator 312.

Suitable connectors are provided between cable 298, enclosure 268 and auxiliary shutter 210 to allow wand 280 and cable 298 to be detached from shutter 210 and enclosure 268, and also to allow shutter 210 to be disconnected from enclosure 268 for easy transportation and storage. Details of such connectors are well known to those skilled in the art.

Circuit 286 may be modified by the removal of solenoid(s) 300 and/or 308, and their associated switches 302, 310, respectively, and the direct connection of the two activation switches to their respective solenoids, depending on the electrical capacity of the circuit and the length of cable 298.

Referring again to Figs. 1-5, as previously noted, the camera, subject and auxiliary shutter are arranged such that the camera has a clear view of the subject. Initially, an exposure of the film in holder 44 may be made in a conventional manner by depressing shutter release 42, which activates the shutter in camera 38 and may also simultaneously trigger strobe lights, such as light 54. The initial exposure is calculated to greatly under-expose the film. Various photographic filters, such as filter 116, may be placed over lens 40 during the initial exposure. The initial exposure may be conducted in ambient studio lighting or in complete darkness, depending on the effect which is to be achieved. In some situations, there may be no need for an initial exposure.

Once the initial exposure is made, filter 116 may be removed from the front of lens 40, and, if the studio lights have already not been extinguished, the lights are turned out, leaving the studio is complete darkness. The window in the auxiliary shutter is closed and the shutter in camera 38 opened. Light source 58 is activated, causing light to be emitted from end 62b of fiber-optic cable 62. The photographer now has an opportunity to experiment with wand 66, determining how far from the subject the wand should be located to achieve the desired effect. Like a golfer taking a practice swing, the light from the wand may be played over the subject indefinitely so long as window 30 is closed.

When the photographer is ready to expose the film, wand 66 is positioned to properly direct light onto subject 50, and blade activation switch is depressed. This results in relay 84 closing switch 86, thereby activating the rotary solenoid and shifting blade 32 to its fully withdrawn position. This, in turn, closes switch 36, and, provided that second switch 90 is also closed, activates timer 88, which begins emitting audible tones, such as beeps, at one-second intervals.

The audible signal provides an indication to the photographer of the duration of a particular. Light reflected from the subject passes through window 30, lens 40, and selectively exposes a portion of the film held in film holder 44. At the end of the desired exposure time, blade activation switch 68 is again depressed, thereby unlocking the switch, releasing relay 84 and closing window 30 as blade 32 moves to its fully extended position. This of course releases first switch 36 and eliminates the operation of timer 88 and its integrally constructed sound generator.

The photographer then directs the light to any other portions of the subject which are to be highlighted and repeats the operational sequence of the auxiliary shutter. In some instances, the overall time for making one photograph may be thirty to forty-five minutes, as repeated five to ten second exposures are made of individual parts of the subject. As previously noted, a variety of light-modifying implements may be affixed over the emission end of fiber-optic cable 62 to color the light or otherwise change its characteristics.

If the embodiment of Figs. 6-10 is in use, when the photographer is ready to expose the film, wand 280 is positioned to properly direct light onto subject 262. Filter 243 may be positioned over window 226 if a soft or special effect is desired, depending upon the optical characteristics of filter 243. Pressing filter activation switch 284 activates relay 308, relay switch 310 and rotary solenoid 238, thereby extending filter holder 242 and filter 243 over window 226. In this embodiment, filter activation switch 284 must be held down to keep filter 243 in its extended position. Filter 243 may be periodically extended or withdrawn over window 226 depending on the desired effect. For instance, assuming that filter 243 is of the soft focus type, the photographer may desire to soften the highlight on various parts of the subject by interposing filter 243 between lens 40 and subject 50. This is easily accomplished by pressing filter activation switch 284.

The provision of filter holder 242 and its associated hardware and electronics allows the use of filter 243 as desired by the photographer during the course of the shoot. Without this feature, as previously noted, a filter must be placed on and removed from the camera lens, which may result in movement of the camera. Alternately, to eliminate the possibility of moving the camera as the filter is repeatedly placed on and removed from the camera lens, all of those areas which are desired to be photographed with the filter in place must be photographed separately from those area which are not to be photographed with the filter. This procedure requires duplication of effort on the part of the photographer - who must photograph the entire subject with the filter in place - then re-photograph the entire subject without the filter in place - and remember which areas have been so photographed - to achieve desired effects. The provision of filter holder 242 allows the photographer to concentrate on one aspect of the subject and to selectively insert or remove the filter.

In all of the embodiments of the invention, all of the components of the exposure control apparatus that are normally visible, are finished in a dark matte finish. In the event that part of the apparatus is actually in the field of view of the camera during film exposure, the apparatus component will not reflect any light which would cause the film to be exposed. The photographer generally wears dark clothing and dark gloves so that no light is reflected off of his body during exposures.

The background of the studio may be uniformly dark, or, if it is not possible or desireable to have such a background, the background may be eliminated from the field of view of the camera by installing a mask over a portion of window 30 to eliminate any part of the field of view which is not desired to be exposed during the selective exposure of the film.

Exposure times must be determined experimentally by each photographer, depending on the desired effect to be created, the speed of the film, lens aperture, etc. Additionally, because the intensity of light is inversely proportional to the square of the distance from the light source to the object being illuminated, a less intense light, and hence, a longer time interval to achieve the same relative exposure of the film is required if the wand is held at a greater distance from the subject than if the wand is held close to the subject.

Thus an apparatus and a method for controlling a photographic exposure have been disclosed. In one embodiment, the photographer may insert or remove a special effects filter during the photo session without touching the camera. The invention provides for repeated exposures of portions of a light-sensitive film while not inducing movement into the camera support. Repeatable results may be achieved because the photographer knows precisely how long each exposure segment is.

Although a preferred embodiment of the invention, and a modification of the auxiliary shutter thereof have been disclosed herein, it should be appreciated that further modifications and variations may be made to the apparatus and method without departing from the scope of the invention as defined in the appended claims.

## Claims

1. A photographic exposure control apparatus (10) for selectively exposing, with light reflected from a subject (50) being photographed, portions of a light sensitive film contained in a camera (38) having a lens (40) characterized by: directable light source means (14); and auxiliary shutter means (12) located between the camera lens (40) and the subject (50), the auxiliary shutter means (12, 212) including a housing structure (16) having a window (30) therein, the window being selectively opened and closed by blade means (32) which is movably mounted on the housing structure, the housing structure being operable to block entry of light into the lens (40) when the window (30) is closed and to admit light into the lens when the window is open.

2. The exposure control apparatus of claim 1 wherein the housing structure (16) is a box-like structure and wherein the blade means (32) is contained within the housing structure and which includes blade motor means (34) for shifting the blade means between a withdrawn position, wherein the window (30) is open, and an extended position, wherein the window is closed.

3. The exposure control apparatus of claim 2 wherein the blade motor means includes a solenoid (34) carried on the housing structure (16) and connected to the blade means (32).

4. The exposure control apparatus of claim 2 wherein the directable light source means (14) includes a first switch carried (68) thereon for activating the blade motor means (34).

5. The exposure control apparatus of claim 2 which further includes blade timing means (88) to provide an indication of elapsed exposure time when the blade means (32) is in its withdrawn position.

6. The exposure control apparatus of claim 4 wherein the blade timing means (88) includes a blade timing mechanism for timing predetermined time increments and a first sound generator which emits a first distinct audible sound at the end of each time increment.

7. The exposure control apparatus of claim 1 wherein said auxiliary shutter means (210) further includes a filter holder (242) which is remotely selectively operable to position and remove a filter (243) between the camera lens (40) and the subject (50).

8. The exposure control apparatus of claim 7 wherein the filter holder (242) is mounted on the housing structure (212) and which includes filter motor means (240) for shifting the filter holder between a withdrawn position, wherein the filter (243) is not between the lens (40) and subject (50) and an extended position, wherein the filter (243) is interposed between the lens and the subject.

9. The exposure control apparatus of claim 8 wherein the filter motor means includes a solenoid (240) carried on the housing structure (212) and connected to the filter holder (242).

10. The exposure control apparatus of claim 7 wherein the directable light source (267) includes a second switch (284) for activating the filter motor means (240).

11. The exposure control apparatus of claim 7 which includes a filter timing mechanism (312) having second sound generator which emits a second distinct audible signal to indicate the filter (243) is in its extended position.

12. The exposure control apparatus of claim 1 wherein the directable light source means (14) includes light-tight enclosure (56) having a light source (58) therein, a fiber-optic, light transmitting cable (62) having one end (62a) thereof fixed in the enclosure (56) proximal to the light source (58) and extending outwardly from the enclosure, and a fibre-optic directing wand (66) received on the other end (62b) of the fibre-optic cable (62) for directing the light which is emitted from the other end (62b) of the fibre-optic cable (62).

13. The exposure control apparatus of claim 13 wherein the wand (66) includes attachment means (70) thereon for attaching light-modifying implements (112) thereto for modifying the light which is emitted from the fiber-optic cable (62).

14. The exposure control apparatus of claim 12 wherein the directable light source container (56) includes a cooling fan (60) for cooling the light source (58) and casters for allowing free rolling movement of the container.

15. The exposure control apparatus of claim 1 wherein all of the apparatus components which are visible under normal lighting conditions have a dark matte finish thereon to reduce reflection of ambient light therefrom.

16. A method of controlling a photographic exposure characterized by: positioning a subject (50) and a film-containing camera (38); positioning an auxiliary shutter (12) between the subject and the camera, with the auxiliary shutter in a closed condition; darkening the environment containing the subject and the camera; providing an emitted light beam which may be directed towards the subject using a light source (58) and a fiber-optic cable (62) which has an auxiliary-shutter control button (68) located thereon; directing the emitted light beam at the subject; opening the auxiliary shutter (12) for a predetermined time interval with the emitted light beam directed at a particular portion of the subject; and closing the auxiliary shutter (12) with the auxiliary-shutter control button (68) at the end of the predetermined time interval.

17. The method of claim 16 which includes selectively, remotely positioning a photographic filter (243) between the subject (50) and the film-containing camera (38).

18. The method of claim 16 which includes changing the nature of the emitted light by providing a light-modifying implement (112) over the emitting end (62b) of the fiber-optic cable (62).

FIG.1

EP 0 451 413 A2

54

12

16

116

44

38

30

40

42

34

46

82

78

10

50

112

68

66

52

*FIG.2*

FIG.3

EP 0 451 413 A2

FIG. 4

FIG. 5

FIG.9

FIG.6

FIG.7

TIMER

EP 0 451 413 A2

FIG.8

FIG.10